# EUROPEAN PATENT SPECIFICATION

(11) **EP 0 825 358 B1**
(45) Date of publication and mention of the grant of the patent: **03.05.2000**
(21) Application number: 96890134.8
(22) Date of filing: 21.08.1996
(51) Int. Cl.: F16F 15/00, B60K 5/12, G01H 1/00

(54) **Method for investigation of structure borne noise paths**
Verfahren zum Untersuchen von Körperschallwegen
Méthode d'étude de la transmission du bruit dans une structure

(43) Date of publication of application: 25.02.1998
(73) Proprietor: AVL List GmbH, 8020 Graz (AT)
(72) Inventor: Quinn, David Charles, 8047 Graz (AT)
(74) Representative: Babeluk, Michael, Dipl.-Ing. Mag.

(56) References cited:
- GB-A- 1 020 851
- US-A- 5 133 527
- US-A- 5 332 061
- US-A- 5 418 858
- IEEE TRANSACTIONS ON ACOUSTICS,SPEECH AND SIGNAL PROCESSING, vol. 35, no. 10, October 1987, pages 1423-1434, XP000014939 ELLIOTT S J ET AL: "A MULTIPLE ERROR LMS ALGORITHM AND ITS APPLICATION TO THE ACTIVE CONTROL OF SOUND AND VIBRATION"

## Description

The invention relates to a method for investigation of structure borne noise paths in a complex structure according the preamble of claim 1. Furthermore the invention is directed to a system for investigation of structure borne noise paths in a complex structure according to the preamble of claim 8. One example of such complex structure is a vehicle body on which a combustion engine is mounted. In this case the combustion engine forms the first part of the structure whereas the vehicle body forms the other part. Engine mounts forming connecting elements between these parts are provided to minimize transfer of vibrations from the combustion engine to the vehicle body.

Another example of such complex structure is the suspension of a wheel of a vehicle. Vibrations are induced by the axle of a road wheel of the vehicle into the vehicle body.

Such complex structures have a lot of degrees of freedom and it is not easy to determine forces acting between parts of the structure and causing vibrations and noise. In order to be able to minimize vibrations and noise by structural changes it is necessary to learn a lot about the dynamic behaviour of the system.

One method of prior art is to attach one or more sensors like accelerometers on critical parts of the structure to be able to determine the amount and the velocity of deviations of these parts. However it is not always easy to determine forces acting on certain parts of the structure like an engine mount. In many cases it is not possible to determine even the direction of such force. It is therefore not uncommon to obtain misleading results during such inventions of complex structures.

One approach to be able to determine the force acting upon an engine mount is to insert an element which is adapted to measure the force or alternatively to disconnect parts which are suspected vibration paths. However, in such a case a lot of adaptions have to be made on the structure. On the one hand this leads to a change of the structure itself so that the results obtained by this method are not fully reliable and on the other hand this method is very time consuming and cumbersome. Further knowledge of the system and its behaviour can be gained by changing engine mounts to such ones of another type. However, this is also time consuming and allows only a trial and error approach for optimisation of the system.

US-A 5,133,527 and US-A 5,418,858 disclose active mount systems in which vibrations and noise are minimized by an electronic circuit in which data from sensors are inputted and which calculates a certain control force to be generated by some actuators. Such systems can be very effective and allow a substantial reduction of noise and vibration. However, such systems make it necessary that all components have to be built in into each vehicle produced and to work over the whole lifetime of such vehicle. Therefore the costs of such systems are high.

US 5,332,061 A describes an active vibration control (AVC) system for attenuating vibrational frequency components generated by an engine and transferred through an engine mounting unit to vibrate a motor vehicle body. With such system it is possible to improve the dynamic behaviour and the noise of a vehicle however, it is not possible to get enough information for making appropriate changes or to design an engine mounting unit so as to improve vibration and noise. Similar arguments are true for the method disclosed in US 5,418,858 A.

Starting from the closest prior art known from US-A- 5 332 061, it is an object of the invention to avoid these problems and to provide a method which is easily applicable and a method and a system which allow to obtain reliable results for subsequent optimisation of the structure and connecting elements.

According to the present invention this method consists of the steps of the characterizing part of claim 1.

Further the invention relates to a system of claim 8.

It is essential that the behaviour of the structure is changed by the application of the active control so that information of the system is obtainable. Important is that the change of behaviour may be conducted without mounting or dismounting parts of the structure. In this way it is possible to calculate forces acting in the structure in different operating conditions even if it is not possible to measure them directly. Further it is possible to simulate different parts and their influence on the behaviour of the structure. So it is possible to simulate another engine mount instead of the mount actually used in the structure. Since these operations are possible by changing the control strategy of the controller such experiments are very effective and easy to conduct.

The frequency range of operation, for vehicle applications, will typically be 30 HZ to 800 HZ. The system can be used in one of two modes of operation
1) Harmonic vibration cancellation whereby a reference signal is taken from a prime source of vibration and the controller is set up to cancel one or multiple harmonics (integer and/or non integer) of the reference frequency. The reference frequency need not to be stationary but could, for example, be generated by an engine crankshaft speed sensor in vehicle applications. The actuator is applied to the point of interest in order to cancel the vibration at that point and chosen direction. Assessment of the influence of reducing the vibration at the test point upon the overall structure can then be assessed by conventional measurement and subjective assessment.
2) Broad band cancellation similar in application to the narrow band harmonic system but here the controller is set up to cancel all frequencies within the pass band of interest. The control system may use feed forward or feedback control methods as appropriate e.g. making use of established LMS filtered X and filtered error or other suitable algorithms.

In preferred embodiments of the present invention different control strategies are applicable.

In the following the invention is further described by some preferred embodiments.

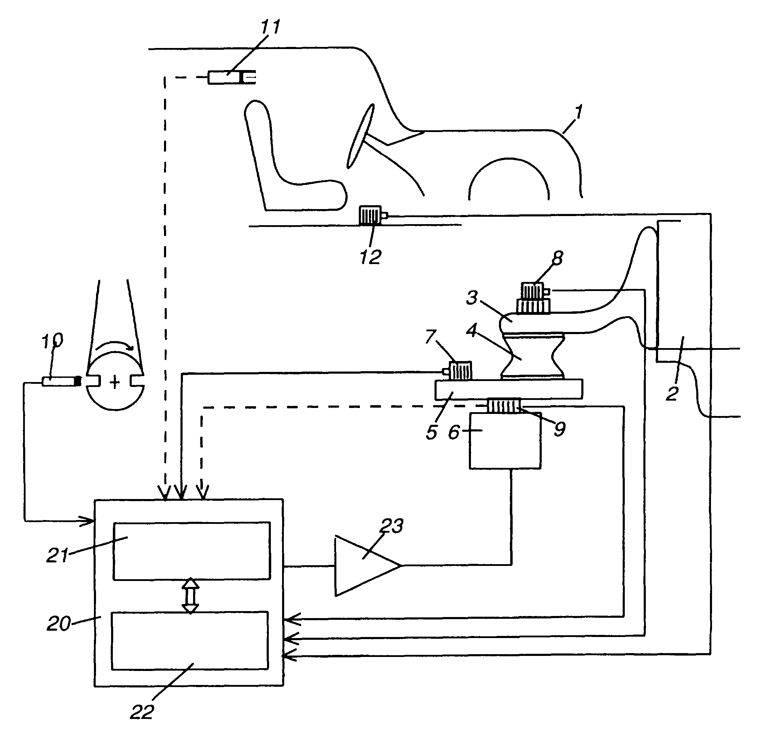

Fig. 1 shows schematically a structure with a system according to the present invention.

A vehicle 1 is equipped with an internal combustion engine 2. The combustion engine 2 comprises an engine mount 3 with a resilient element 4 which is attached at the part 5 of the vehicle body which is not shown for sake of convenience. In the vicinity of the resilient body 4 there is attached an electromagnetic type actuator 6 which is designed to apply predetermined forces to the part 5 of the vehicle body. A sensor 7 which is an accelerometer senses the dislocation of part 5 in the vicinity of engine mount 3. A further sensor 8 senses the dislocation of the engine mount 3 on the side of the combustion engine 2. A force measuring element 9 measures the force acting on the part 5 of the vehicle body induced by actuator 6. A reference signal sensor 10 detects the speed of the engine of the vehicle.

Further a microphone 11 or number of microphones is (are) disposed in the interior of the vehicle preferably in a position corresponding to the occupants head(s). An additional sensor 12 detects vibrations at another part of the vehicle body.

A controller 20 consists internally of an adaptive cancellation controller 21 and a setting and evaluation unit 22. The controller 20 is connected to sensors 7, 8, 9, 10, 12 and to the microphone 11. Based upon signals inputted by these sensors the adaptive cancellation controller calculates a control signal. This control signal is fed to an amplifier 23 which drives the actuator 6. The control signal of the cancellation controller 21 is calculated according to a control strategy determined by the setting and evaluation unit 22. Such control strategy which may be also extended to a multi-channel vibration control is disclosed in Elliott, Stothers and Nelson "a multiple error LMS algorithm and its application to the active control of sound and vibration" IEEE transactions on acoustics, speech and signal processing Oct. 1978. Further details of such control strategies are disclosed in US-A 5,133,527 and US-A 5,418,858. The method is not limited to these control strategies.

One example of operation of the system of the present invention is that a control strategy is chosen so that dislocation of sensor 7 is minimized. This simulates a situation in which part 5 of the vehicle body is very stiff at the frequency or frequencies of control. The force measured by sensor 9 which may be a strain gauge corresponds to the force acting in part 5 and in the engine mount 3 if it would be very stiff. By changing the control strategy it is possible to simulate different degrees of stiffness of part 5. In such cases it is not possible to determine the force acting on part 5 based upon the signal of force sensor 9. However, comparing dislocations measured by sensors 7 and 8 and considering the characteristic of the resilient element 4 it is possible to calculate the force transferred by this engine mount 3. It will be noticed that by this arrangement displacements and forces may be measured and calculated with respect to a predetermined direction. If it is necessary to investigate forces acting in other directions additional sensors and actuators have to be applied.

In the same way it is possible to simulate resilient elements with different characteristics. Comparing phases and amplitudes of the signals from sensors 7 and 8 such simulations may be conducted.

In addition to their use by the controller microphone 11 and the additional sensor 12 allow to evaluate the results of different simulations in terms of riding comfort.

## Claims

1. Method for investigation of structure borne noise paths in a complex structure consisting of at least two parts (2, 5) connected by connecting elements for example dampers or engine mounts (3) or suspension isolators, wherein one of these parts (2, 5) generates vibrations which cause noises, said method comprising the following steps:
- attaching at least one actuating device comprising an additional inertial mass and an actuator (6) to a point in the vicinity of a connecting element (4) between two parts (2, 5) of the structure, said actuator (6) being connected with a controller (21);
- attaching at least one sensor (7) for detecting the amount of vibration near the point in which the actuating device is attached or in the actuating device, said at least one sensor (7) being connected with the controller (20);
- obtaining a reference signal or signals from the part (3) which generates vibrations;
- drivingly connecting the controller (20) to the actuating device (6) in order to activate the actuating device (6);
said method being characterized by the following steps:
- providing more than one control strategy for driving the controller (20);
- driving the controller (20) according to different predetermined control strategies in consideration of said reference signal or signals;
- measuring the change of vibration or noise at predetermined locations of the structure for said different control strategies;
- calculating the influence of the vibrational force transmitted by the connecting element (4) on the measured values.

2. Method according to claim 1, wherein the controller (20) performs a narrow band cancellation of vibration harmonics of the reference signals.

3. Method according to claim 1, wherein the controller (20) performs a broad band cancellation of vibration.

4. Method according to claim 1 or 2, wherein the controller (20) utilizes a feed forward control strategy.

5. Method according to claim 1 or 2, wherein the controller (20) utilizes a feed back control strategy.

6. Method according to one of claims 1 to 5, wherein the controller (20) is set up to allow for emulation of dynamic absorbers.

7. Method according to one of claims 1 to 6, wherein one control strategy consists in minimization of dislocation at the point at which the actuator (6) is attached.

8. System for investigation of structure borne noise paths in a complex structure consisting of at least two parts connected by connecting elements like dampers or engine mounts (3), wherein one of these parts (2, 5) generates vibrations which cause noises, said system comprising:
- an actuating device (6) attached at a point in the vicinity of the connecting element;
- a sensor (7) for detecting vibrations attached at a point of the structure in the vicinity of the actuating device;
- a reference signal sensor (10) for obtaining a reference signal from the part which generates vibrations;
- (a) at least one further sensing device (8, 9, 11, 12) for evaluation of the amount of vibration or noise transmitted by the structure;
- a controller (20) connected with the actuator (6), the sensor (7), the refence signal sensor (10) and the at least one further sensing device (8,9,11,12), which controller (20) is designed to drive the actuator (6) according to the signals from the sensor (7), the refence signal sensor (10) and the at least one further sensing device (8, 9, 11, 12), **characterized in that** said controller (20) comprises a cancellation and a setting and evaluation unit (22) for setting different control strategies and for obtaining information about the dynamic behaviour of the structure.

9. System according to claim 8, wherein the at least one further sensing device is a microphone (11), an accelerometer (12) or a force measuring device (9) or multiples of such sensor devices.

## Patentansprüche

1. Verfahren zur Untersuchung strukturgetragener Geräuschwege in einer komplexen Struktur, bestehend aus mindestens zwei Teilen (2, 5), die durch Verbindungselemente verbunden sind, beispielsweise Dämpfer oder Motorhalterungen (3) oder Aufhängungsisolatoren, wobei einer dieser Teile (2, 5) Schwingungen hervorruft, welche Geräusche verursachen, wobei das Verfahren folgende Schritte umfasst:
- Befestigung von mindestens einer Betätigungsvorrichtung, umfassend eine zusätzliche träge Masse und einen Aktuator (6), an einem Punkt in der Nähe eines Verbindungselements (4) zwischen zwei Teilen (2, 5) der Struktur, wobei der Aktuator (6) mit einem Regler (21) verbunden ist;
- Befestigung mindestens eines Sensors (7) zur Feststellung des Ausmaßes der Vibration in der Nähe des Punktes, an dem die Betätigungsvorrichtung befestigt ist, oder in der Betätigungsvorrichtung, wobei der mindestens eine Sensor (7) mit dem Regler (20) verbunden ist;
- Empfang eines Referenzsignals oder von Referenzsignalen von dem Teil (3), der die Vibrationen hervorruft;
- Herstellung einer Antriebsverbindung des Reglers (20) mit der Betätigungsvorrichtung (6), um die Betätigungsvorrichtung (6) zu aktivieren;
wobei das Verfahren durch die folgenden Schritte gekennzeichnet ist:
- Bereitstellung von mehr als einer Reglerstrategie zum Antrieb des Reglers (20);
- Antreiben des Reglers (20) gemäß unterschiedlichen vorbestimmten Regelstrategien unter Berücksichtigung des Referenzsignals oder der Referenzsignale;
- Messen der Veränderung von Schwingungen oder Geräuschen an vorher festgelegten Stellen der Struktur für die unterschiedlichen Regelstrategien;
- Berechnen des Einflusses der von dem Verbindungselement (4) übertragenen Schwingungskraft auf die Messwerte.

2. Verfahren gemäß Anspruch 1, wobei der Regler (20) eine Schmalbandlöschung der harmonischen Oberschwingungen der Referenzsignale ausführt.

3. Verfahren gemäß Anspruch 1, wobei der Regler (20) eine Breitbandlöschung der Schwingungen ausführt.

4. Verfahren gemäß Anspruch 1 oder 2, wobei der Regler (20) eine Feed-Forward-Regelungsstrategie anwendet.

5. Verfahren gemäß Anspruch 1 oder 2, wobei der Regler (20) eine Feed-Back-Regelungsstrategie anwendet.

6. Verfahren gemäß einem der Ansprüche 1 bis 5, wobei der Regler (20) so eingestellt ist, dass die Emulation dynamischer Absorber möglich ist.

7. Verfahren gemäß einem der Ansprüche 1 bis 6, wobei eine Regelstrategie in der Minimierung der Auslenkung an dem Punkt besteht, an dem der Aktuator (6) befestigt ist.

8. System zur Untersuchung strukturgetragener Geräuschwege in einer komplexen Struktur, bestehend aus mindestens zwei Teilen, die durch Verbindungselemente wie beispielsweise Dämpfer oder Motorhalterungen (3) verbunden sind, wobei einer dieser Teile (2, 5) Schwingungen hervorruft, welche Geräusche verursachen, wobei das System umfasst:
- einen Aktuator (6), der an einem Punkt in der Nähe der Verbindungselemente befestigt ist;
- einen Sensor (7) zur Feststellung von Vibrationen, der an einem Punkt der Struktur in der Nähe der Betätigungsvorrichtung befestigt ist;
- einen Referenzsignalsensor (10) zum Empfang eines Referenzsignals von dem Teil, der die Vibrationen hervorruft;
- mindestens eine weitere Sensorvorrichtung (8, 9, 11, 12) zur Bewertung der Menge der von der Struktur übertragenen Schwingungen oder der Geräusche;
- einen Regler (20), der mit dem Aktuator (6), den Sensoren (7), dem Referenzsignalsensor (10) und der mindestens einen weiteren Sensorvorrichtung (8, 9, 11, 12) verbunden ist, wobei der Regler (20) so ausgelegt ist, dass er den Aktuator (6) nach Maßgabe der Signale vom Sensor (7), vom Referenzsignalsensor (10) und der mindestens einen weiteren Sensorvorrichtung (8, 9, 11, 12) antreibt, dadurch gekennzeichnet, dass der Regler (20) eine Lösch- und eine Einstellungs- und Bewertungseinheit (22) zur Einstellung unterschiedlicher Reglerstrategien und zum Empfang von Informationen über das dynamische Verhalten der Struktur umfasst.

9. System gemäß Anspruch 8, wobei die mindestens eine weitere Sensorvorrichtung ein Mikrophon (11), ein Beschleunigungsmesser (12) oder eine Kraftmessvorrichtung (9) oder eine Mehrzahl solcher Sensorvorrichtungen ist.

## Revendications

1. Procédé de recherche de chemins de bruits créés par la structure dans une structure complexe constituée d'au moins deux parties (2, 5) reliées par des éléments de liaison tels que par exemple des amortisseurs ou Silentblocs, des montures de moteur (3) ou des isolateurs de suspension, dans lequel l'une de ces parties (2, 5) génère des vibrations produisant des bruits, ce procédé comprenant les étapes suivantes :
- fixer au moins un dispositif d'actionnement comprenant une masse d'inertie supplémentaire et un actionneur (6), à un point se trouvant au voisinage d'un élément de liaison (4) entre deux parties (2, 5) de la structure, cet actionneur (6) étant relié à un contrôleur (21),
- fixer au moins un détecteur (7) de détection de l'amplitude de vibration au voisinage du point où le dispositif d'actionnement est fixé ou placé dans le dispositif d'actionnement, ce détecteur au moins unique (7) étant relié au contrôleur (20),
- obtenir un signal ou des signaux provenant de la partie (3) qui génère des vibrations,
- relier en entraînement le contrôleur (20) au dispositif d'actionnement (6) pour activer ce dispositif d'actionnement (6),
caractérisé par les étapes suivantes consistant à :
- fournir plus d'une seule stratégie de commande pour entraîner le contrôleur (20),
- entraîner le contrôleur (20) suivant différentes stratégies de commande prédéterminées compte tenu du signal ou des signaux de référence,
- mesurer le changement de vibration ou de bruit à des endroits prédéterminés de la structure pour les différentes stratégies de commande,
- calculer l'influence de la force de vibration transmise par l'élément de liaison (4), sur les valeurs mesurées.

2. Procédé selon la revendication 1,
dans lequel
le contrôleur (20) effectue une annulation à bande étroite des harmoniques de vibration des signaux de référence.

3. Procédé selon la revendication 1,
dans lequel
le contrôleur (20) effectue une annulation à large bande de la vibration.

4. Procédé selon la revendication 1 ou 2,
dans lequel
le contrôleur (20) utilise une stratégie d'alimentation avant directe.

5. Procédé selon la revendication 1 ou 2,
dans lequel
le contrôleur (20) utilise une stratégie de commande de rétroaction.

6. Procédé selon l'une quelconque des revendications 1 à 5,
dans lequel
le contrôleur (20) est monté pour permettre l'émulation d'absorbeurs dynamiques.

7. Procédé selon l'une quelconque des revendications 1 à 6,
dans lequel
une stratégie de commande consiste à minimiser la désorganisation au point où est fixé l'actionneur (6).

8. Système de recherche de chemins de bruits créés par la structure dans une structure complexe constituée d'au moins deux parties reliées par des éléments de liaison tels que des amortisseurs ou Silentblocs ou des montures de moteur (3), dans lequel l'une de ces parties (2, 5) génère des vibrations produisant des bruits, ce système comprenant :
- un dispositif d'actionnement (6) fixé à un point situé au voisinage de l'élément de liaison,
- un détecteur (7) de détection des vibrations, ce détecteur étant fixé à un point de la structure situé au voisinage du dispositif d'actionnement,
- un détecteur de signal de référence (10) pour obtenir un signal de référence provenant de la partie qui génère des vibrations,
- au moins un autre dispositif de détection (8, 9, 11, 12) pour évaluer l'amplitude de la vibration ou du bruit transmis par la structure,
- un contrôleur (20) relié à l'actionneur (6), au détecteur (7), au détecteur de signal de référence (10) et à l'autre dispositif de détection au moins unique (8, 9, 11, 12), ce contrôleur (20) étant conçu pour entraîner l'actionneur (6) suivant les signaux reçus du détecteur (7), du détecteur de signal de référence (10) et de l'autre dispositif de détection au moins unique (8, 9, 11, 12),
caractérisé en ce que
le contrôleur (20) comprend une annulation et un bloc de réglage et d'évaluation (22) pour établir différentes stratégies de commande et pour obtenir une information relative au comportement dynamique de la structure.

9. Système selon la revendication 8,
dans lequel
l'autre dispositif de détection au moins unique est un microphone (11), un accéléromètre (12) ou un dispositif de mesure de force (9) ou encore des multiples de ces dispositifs de détection.
